# EUROPEAN PATENT SPECIFICATION

(11) **EP 0 554 621 B1**
(45) Date of publication and mention of the grant of the patent: **23.08.1995**
(21) Application number: 92311520.8
(22) Date of filing: 17.12.1992
(51) Int. Cl.: F21V 31/00, B60S 1/10

(54) **Self-cleaning gas-tight lamp assembly**
Selbstreinigende gasdichte Lampenanordnung
Monture de lampe étanche auto-nettoyante

(30) Priority: 19.12.1991 FI 915989
(43) Date of publication of application: 11.08.1993
(73) Proprietor: A. AHLSTROM CORPORATION, 29600 Noormarkku (FI)
(72) Inventor: Koivurova, Heikki, SF-96400 Rovaniemi (FI)
(74) Representative: Gilmour, David Cedric Franklyn

(56) References cited:
- EP-A- 0 107 900
- DE-A- 2 055 810
- DE-U- 8 704 323
- US-A- 2 347 055

## Description

The present invention relates to the field of lighting and, in particular, to lamp assemblies, especially to such in which a source of light, such as a mercury, sodium or halogen lamp, a fluorescent tube or other such source of light has been gas-tightly encapsulated.

Such lamp assemblies are widely used in industry. When using lamps in industrial conditions, the tendency is to try to achieve long maintenance intervals for reasons of, among others, costs. A known approach to this solution has been to provide the lamp with a filter capable of preventing any fine material from entering the lamp assembly. Layers of chemical substances-adsorbing material, e.g., activated coal, are often associated with the filter. Besides the filtering function, the filter performs another task, i.e. that of regulating pressure. When the source of light is turned on, it heats the inside of the lamp assembly, and to avoid an increase in pressure the air is directed through the filter to outside of the lamp assembly, and when the source of light is turned off, it allows replacement air to flow to the inside of the lamp assembly.

Such lamp assemblies do, nevertheless, have some deficiencies. The assembly is not tight, and allowing water to enter the assembly can be specially dangerous because electric parts made of aluminum start to corrode, whereby hydrogen gas is generated, which in turn causes a danger of explosion. It must further be stated that dust collects easily on the glass of the lamp, thereby shortening the service life of the lamp and reducing its efficiency. Because of this, with lamps situated in especially dirty environments, i.e. weaving mills, foundries, bakeries, painting shops and like, the lamp assemblies and their glasses will have to be cleaned almost daily by hand. Several different solutions for reducing the necessary amount of cleaning have been tried in connection with lamp assemblies, among them disposable covering membranes for the glass and protecting bags covering the whole of the assembly, both made of plastic. The bags covering the whole of the lamp assembly have been found to be a good solution in, e.g., car painting shops, where it would otherwise be very difficult to prevent paint mist from covering the lamp assembly. However, using covering bags, even if it otherwise were also suitable for places demanding a greater level of hygiene, i.e. operating theatres and production premises of foodstuffs, is work-intensive, especially so if the lamp assembly is located at a high level or is hard to reach.

A lamp assembly including pressure maintaining means is for instance known from US-A-2 347 055. The object of the present invention is to increase the service life and safety of a lamp assembly and, when needed in, e.g., demanding applications, to decrease the drawbacks and deficiencies related to the cleaning of the assembly and follow-up effects resulting therefrom. It is a particular object of the invention to provide a new self-cleaning lamp assembly capable of reducing the amount of frequent cleaning needed by improving the self-cleaning capability of the assembly. Besides this, it is an object of the invention to ensure the lighting efficiency is maintained throughout the lengthened service life of the lamp assembly.

These objects are achieved by the lamp assembly, the features of which are disclosed in the appended claims.

According to the present invention there is provided a self-cleaning lamp assembly or one maintaining itself clean, especially a gas-tightly encapsulated light source such as, e.g., a mercury, sodium, or halogen lamp, fluorescent tube or other such light source, in which changes of the prevailing internal pressure within the lamp assembly are prevented, preferably the pressure is maintained essentially constant by means of an expanding means, such as a gas bellows, accumulator, chamber, bag, a flexible membrane or the like, the means either communicating fluidly with the inside of the lamp assembly or forming a part of the outer surface of the lamp assembly a characterizing feature of which is that the lamp assembly includes cleaning apparatus powered or activated by the gas or air heating and/or cooling in the lamp assembly.

The invention is based on the idea that the lamp assembly is made gas-tight, nevertheless so as to maintain an even internal pressure with the light source switched both on and off, i.e. regardless of the contraction or expansion of the internal gas. The application according to our invention utilizes the ability of storing heat energy released from the operating lamp into, e.g. a bellows means, an accumulator, chamber, a flexible membrane or the like pressure maintaining means capable of expanding and contracting in the form of changes of volume of air or gas, and/or storing heat energy into a, e.g., bi-metallic or other apparatus capable of storing heat energy in the form of changes of shape and transforming thus stored heat to mechanical energy. One embodiment according to our invention utilizes the temperature-variation induced expansion and/or contraction of the internal gas or air for activating a cleaning or maintenance apparatus.

Besides an expanding means fluidly communicating with the lamp assembly, the pressure within the lamp assembly can alternatively be compensated for by an expandable part of the outer shell of the lamp assembly, such as a flexible "glass" of the lamp assembly. Thus, in this case the term "glass" is also intended to mean any transparent membrane or like sheet, capable of restoring or returning to its original shape. When the "glass" is expanded or inflated by the pressure, dirt is removed from the "glass" by the change of shape. The removal of dirt can further be enhanced by, e.g., providing the inside of the "glass" with a dog or hook or other such fastening means and the lamp assembly body proper with another dog or other such fastening means, whereby the softer dog made of "glass" will yield and bounce or jolt off the lamp body after a certain degree of expansion or inflation.

In the following, some preferred embodiments of the invention are exemplarily explained by way of reference to the accompanying drawings, of which
- Fig. 1: illustrates a preferred embodiment of the invention partly in cross-section, partly in elevation;
- Fig. 2: illustrates, in cross-section, another preferred embodiment of the invention; and
- Fig. 3: illustrates, in cross-section, a third preferred embodiment of the invention.

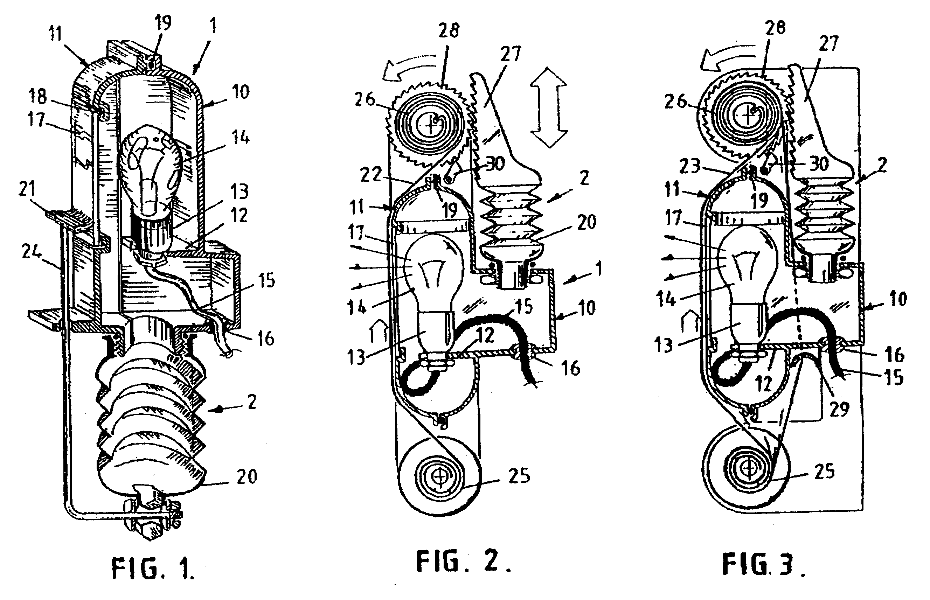

As is clear from Figures 1-3, each of the lamp assemblies 1 according to the exemplified embodiments comprises a two-piece lamp assembly body 10, 11, which can be made of metal, e.g. aluminum, or a suitable composite material. The lamp assembly will be supported on its location, e.g. the wall or roof of an industrial hall, by the lamp assembly body. In order to make the lamp assembly gas-tight, the contact surfaces between the front part 11 and the rear part 10 are sealed with a suitable seal 19. In addition to this, it is desirable that the lamp assembly body can be opened in order to change the lamp, i.e. the front and rear parts 10, 11 of the lamp body are detachably fastened to each other. The actual means of fastening the front and rear parts together is not essential to the invention. The joint can be secured by, e.g., a screw, a fastening collar, a spring lock, a clamp or other such fastener (not shown) ensuring that the seal 19 is tightly compressed between the contact surfaces of the front and rear parts 10, 11. A support 12 is provided at the rear part 10 of the lamp assembly body for the socket 13 of a screw-in light bulb 14. At the bottom of the rear part 10 of the lamp assembly body there is provided a scaled lead-through 16 for the power cable 15 of the socket 13. As is clear from the drawings, the rear part 10 of the lamp assembly body is connected to the front part 11 of the lamp assembly body. The front part 11 is provided with a transparent window element 17, the gas-tight connection of which with the front part 11 is secured with a seal 18.

It has already been initially noted that some embodiments of the present invention are capable of not only increasing the service life and safety of the lamp assembly, but also capable of improving the self-cleaning properties of the lamp, i.e. maintaining the lamp clean. This is achieved by providing a lamp assembly according to the intention with means 2 that, in addition to preventing the gas or air within the assembly from escaping from the assembly or air from entering the lamp assembly 1, keep the lamp assembly, especially the transparent window element 17 clean at the outside.

A characterizing feature of the invention is that the means 2 for cleaning the lamp assembly 1 comprises a bellows means 20 which changes its shape with the heat-variations that cause expansion and/or contraction of the internal air or gas. Preferably the bellows means is a gas bellows or such, which, when receiving heated and therefore expanded air or gas from the lamp assembly 1, expands or lengthens, and when the lamp assembly 1 cools down, returns the air or gas to the lamp assembly by being contracted or shortened by, e.g, spring force. The other side of the bellows means is immovably fastened to the lamp assembly so as to communicate fluidly with the interior thereof.

In the exemplified embodiments the gas bellows 20 transforms the expansion and contraction of the gas to reciprocating mechanical work and thereby powers an exterior cleaning or maintenance apparatus 2. The examples of the cleaning or maintenance apparatus 2 according to the invention comprises
- in the embodiment exemplified in Fig. 1, a brush 21, connected to the bellows,
- in the embodiment exemplified in Fig. 2, a web of membrane-like material 22, moving in front of the window element, and
- in the embodiment exemplified in Fig. 3, a web of bag-like material 23 moving so as to cover the lamp assembly.

In the first embodiment, illustrated in Fig. 1, the cleaning apparatus 2 comprises a brush 21 or other wiping/sweeping means for sweeping the lamp assembly 1, preferably the lamb assembly glass 17. The brush 21 is operatively connected to the moving, free end of the gas bellows 20 by a power transmission means 24 for operating the brush 21 in step with the expanding and contracting air or gas. In this embodiment the power transmission means is a bar means 24, one end of which is connected to the freely moving end of the bellows 20 and other end of which is connected to the body of the brush 21.

In the second embodiment, illustrated in Fig 2, the cleaning apparatus comprises a web of transparent, preferably membrane-like single-layered material 22, covering generally the whole glass 17 or the light window of the lamp assembly. The web is fed from a feed reel 25, and it is spooled to a collecting reel 26 subsequent to having traversed the lamp assembly. The collecting reel 26 is connected to the gas or air receiving and returning gas bellows 20 by means of power transmission means 27, 28 for moving the web 22 sequentially over the glass 17 or light window in step with the expanding and contracting air or gas.

In the third embodiment of the invention, shown in Fig. 3, the cleaning means comprises a tubular transparent covering element 23. The element 23 is fed from a feed reel 25, and it is spooled to a collecting reel 26 subsequent to having traversed the lamp assembly 1. The collecting reel 26 is connected to the gas or air receiving and returning gas bellows 20 by means of power transmission means 27, 28 for moving the web 23 sequentially over the glass 17 or light window in step with the expanding and contracting air or gas.

In this third embodiment the covering element is a web of tube-like transparent material 23, and a cutting blade 29 is located between the feed reel 25 and the lamp assembly 1, preferably on the rearside of the lamp assembly 1, for slicing the web of bag-like material longitudinally open so as to allow the web of material 23 to move on to cover the lamp assembly.

As Figs. 2 and 3 illustrate, the power transmission means of a lamp assembly according to the second and third embodiment of the present invention comprise
a) a toothed rack means 27, the other end of which is connected to the freely moving end of the bellows 20 and the other end of which is free, and
b) a gear wheel 28, the pitch of which is similar to that of the toothed rack 27, the gear wheel forming a part of the collecting reel 26 or of the shaft of the collecting reel or being fixedly attached to the driving shaft of the collecting reel 26.

Thereby the axial movement of the toothed rack 27 turns the toothed wheel 28 and with it the collecting reel 26, thus moving the web of material 22, 23 onwards a distance corresponding to the turning of the reel and so a clean portion of the web of material 22, 23 is moved to cover the light window 17. In the embodiments of Figs. 2 and 3 the collecting reel 26 is a freely turning one, so it is preferable to have the collecting reel acted on by a suitable ratchet 30, thus ensuring that the web of material is kept constantly tensioned. The ratchet 30 allows the collecting reel to turn in one direction only during either the expansion or contraction of the gas, whereby the web is kept tensioned and straight in front of the lamp assembly 1 or the light window 17 of the lamp assembly.

The invention has been described by way of example, with reference to some of the preferred embodiments, and it is not intended to limit the scope of the invention to solutions utilizing an expanding and/or contracting gas. As will be clear to one skilled in the art, many modifications and deviations can be made within the inventive scope defined in the appended claims. The basic concept of the invention is the gas-tightness of the lamp assembly and compensating for the temperature variations that cause expansion and/or contraction of the internal air or gas, further, utilizing the temperature variation-induced changes of shape (of either the gas or mechanical parts) as a power source or activator of an external cleaning or maintenance assembly, whereby the lamp assembly according to the invention is self-cleaning or maintains itself clean. There is specially reason to emphasize that the scope of the present invention also covers various power cylinders, levers, electrical or pneumatic excitation and activation means and switches for powering or activating the cleaning or maintenance apparatus connected to the lamp assembly.

## Claims

1. A lamp assembly capable of cleaning itself, wherein the light source is gas-tightly encapsulated, in which lamp assembly changes of the prevailing internal gas pressure within the lamp assembly are prevented or minimized, by a gas pressure maintaining means (2), permitting expansion and contraction of air or gas without ingress of ambient air and either communicating fluidly with the inside of the lamp assembly (1) or forming a part of the outer surface of the lamp assembly, ***characterized*** in that the lamp assembly includes cleaning apparatus powered or activated by the gas or air heating and/or cooling in the lamp assembly.

2. A lamp assembly as recited in claim 1, ***characterized*** in that the lamp assembly comprises means for storing the changes of shape caused by temperature variations that cause expansion and/or contraction of the internal gas or air or, storing temperature variation-induced changes of shape of some of the mechanical parts of the lamp assembly and transforming either one or both of the changes of shape into mechanical energy for powering or activating the lamp assembly cleaning apparatus and that the heating and/or cooling of the internal air or gas powers or activates the cleaning apparatus in step with the expansion and/or contraction of the air or gas.

3. A lamp assembly as recited in claims 1 or 2, ***characterized*** in that the pressure maintaining means is an air or gas receiving and/or returning means such as a bellows or the like hollow means which is lengthened when receiving air or gas and shortened when returning air or gas, the shortening being effected preferably by a spring force, and the means being immovably attached from its one end to the lamp assembly.

4. A lamp assembly as recited in any of claims 1-3, ***characterized*** in that the lamp assembly comprises an air or gas receiving and/or returning means, preferably a bellows or the like hollow means, causing the activation or the reciprocating powering motion.

5. A lamp assembly as recited in clams 1 or 2, ***characterized*** in that the lamp assembly comprises a bi-metallic or other such means capable of change of shape, preferably length, when receiving heat energy, the means causing the activation or reciprocating powering motion and being immovably secured to the lamp assembly at its one end.

6. A lamp assembly as recited in claim 4 or 5, ***characterized*** in that the cleaning apparatus comprises a brush or the like means for sweeping the lamp assembly, preferably the covering glass of the lamp assembly, the brush means being connected to the power providing means by the power transmitting means for moving the brush means in step with the expansion and contraction of the air or gas.

7. A lamp assembly as recited in claim 6, ***characterized*** in that the power transmitting means is a bar means, connected from one end to the free, moving end of the bellows or the like hollow means and from the other end to the brush means.

8. A lamp assembly as recited in claim 4 or 5, ***characterized*** in that the cleaning means comprises a transparent, preferably membrane-like web of material covering the covering glass or light window of the lamp assembly, the web being fed from, a feed reel or the like and, having traversed the lamp assembly, being spooled back to the collecting reel, the reel being connected to air or gas receiving and/or returning means by power transmitting means for pulling the web sequentially onto the covering glass or light window in step with the expansion or contraction of the air or gas.

9. A lamp assembly as recited in claim 4 or 5, ***characterized*** in that the cleaning means comprises a transparent web of material, preferably covering the covering glass or light window of the lamp assembly in a tubular manner, the web being fed from a feed reel or the like and, having traversed the lamp assembly, being spooled back to the collecting reel, the reel being connected to the air or gas receiving and/or returning means by power transmitting means for pulling the covering element sequentially in a tubular manner onto the covering glass or light window in step with the expansion or contraction of the air or gas.

10. A lamp assembly as recited in claim 9, ***characterized*** in that the covering element is a tube-like transparent web of material and that between the feed reel and the lamp assembly there is, preferably on the backside of the lamp assembly, a cutting blade for cutting the tube-like web of material open.

11. A lamp assembly as recited in claim 8, 9, or 10, ***characterized*** in that the power transmitting means comprises a toothed rack means connected from its other end to the free, moving end of the bellows or the like, and the rack being in mesh with the gear wheel located on the driving shaft of the freely turning collecting reel which is provided with a ratchet allowing the collecting wheel to turn only during the expansion or contraction of the air or gas.

12. A lamp assembly as recited in any of claims 1-3, ***characterized*** in that the air or gas receiving means is an expandable part of the outer shell of the lamp assembly, e.g., a flexible "glass" of the lamp assembly.

## Patentansprüche

1. Leuchte mit Selbstreinigungsfähigkeit, wobei die Lichtquelle gasdicht gekapselt ist, bei welcher Leuchte Änderungen des in ihrem Inneren herrschenden Drucks durch Gasdruck-Haltemittel (2) verhindert oder minimiert werden, die Expansion und Kontraktion von Luft oder Gas ohne Eintritt von Umgebungsluft zulassen und entweder in Fließverbindung mit dem Inneren der Leuchte (1) stehen oder aber einen Teil der Außenfläche der Leuchte bilden, dadurch **gekennzeichnet**, daß die Leuchte eine Reinigungsvorrichtung aufweist, die durch Erwärmung und/oder Abkühlung des Gases oder der Luft in der Leuchte angetrieben oder betätigt oder wird.

2. Leuchte gemäß Anspruch 1, dadurch **gekennzeichnet**, daß die Leuchte Mittel zur Speicherung der Formänderungen infolge von Temperaturänderungen umfaßt, die Expansion und/oder Kontraktion des internen Gases oder der Luft bewirken, die durch Temperaturänderungen erzeugte Formänderungen einiger der mechanischen Teile der Leuchte speichern und entweder eine oder beide Formänderungen in mechanische Energie für Antrieb oder Betätigung der Reinigungsvorrichtung der Leuchte umwandeln und daß die Erwärmung und/oder Abkühlung des internen Gases oder der Luft die Reinigungsvorrichtung im Schritt mit der Expansion und/oder Kontraktion der Luft oder des Gases antreibt oder betätigt.

3. Leuchte gemäß Anspruch 1 oder 2, dadurch **gekennzeichnet**, daß das Druckhaltemittel ein Luft oder Gas empfangendes und/ oder zurückführendes Organ wie etwa ein Balg oder ein entsprechendes hohles Organ ist, das sich beim Empfangen von Luft oder Gas verlängert und bei Rückführung von Luft oder Gas verkürzt, welches Verkürzen vorzugsweise durch Federkraft bewirkt wird, und das Organ an seinem einen Ende an der Leuchte unbeweglich befestigt ist.

4. Leuchte gemäß einem der Ansprüche 1 bis 3, dadurch gekennzeichnet, daß die Leuchte ein Luft oder Gas empfangendes und/oder zurückführendes Organ, vorzugsweise einen Balg oder ein entsprechendes hohles Organ aufweist, das die Betätigung oder Hin-und-her-Antriebsbewegung bewirkt.

5. Leuchte gemäß Anspruch 1 oder 2, dadurch **gekennzeichnet**, daß die Leuchte ein Bimetall- oder anderes solches beim Empfangen von Wärmeenergie zur Änderung der Form, vorzugsweise der Länge, fähiges Organ aufweist, welches Organ die Betätigung oder Hin-und-her-Antriebsbewegung bewirkt und an einem Ende der Leuchte unbeweglich befestigt ist.

6. Leuchte gemäß Anspruch 4 oder 5, dadurch **gekennzeichnet**, daß die Reinigungsvorrichtung eine Bürste oder ein entsprechendes Organ zum Bestreichen der Leuchte, bevorzugt der Abdeckscheibe der Leuchte aufweist, welches Bürstenorgan über das Kraftübertragungsorgan mit dem Antrieb verbunden ist, um das Bürstenorgan im Schritt mit der Expansion und Kontraktion der Luft oder des Gases zu bewegen.

7. Leuchte gemäß Anspruch 6, dadurch **gekennzeichnet**, daß das Kraftübertragungsorgan ein Stangenorgan ist, das an einem Ende mit dem freien, beweglichen Ende des Balgs oder des entsprechenden hohlen Organs und am anderen Ende mit dem Bürstenorgan verbunden ist.

8. Leuchte gemäß Anspruch 4 oder 5, dadurch **gekennzeichnet**, daß die Reinigungsvorrichtung eine durchsichtige, bevorzugt membranartige Materialbahn aufweist, die das Abdeckglas oder Lichtfenster der Leuchte abdeckt, welche Bahn von einer Abwickelrolle oder dergleichen zugeführt wird und nach Passieren der Leuchte auf eine Aufwickelspule aufgewickelt wird, welche Spule über Kraftübertragungsmittel mit einem Luft oder Gas empfangenden und/oder zurückführenden verbunden ist, um die Bahn schrittweise im Schritt mit der Expansion und Kontraktion der Luft oder des Gases über das Abdeckglas oder Lichtfenster zu ziehen.

9. Leuchte gemäß Anspruch 4 oder 5, dadurch **gekennzeichnet**, daß die Reinigungsvorrichtung eine durchsichtige, das Abdeckglas oder Lichtfenster der Leuchte bevorzugt schlauchartig abdeckende Materialbahn aufweist, welche Bahn von einer Abwickelrolle oder dergleichen zugeführt wird und nach Passieren der Leuchte auf eine Aufwickelspule aufgewickelt wird, welche Spule über Kraftübertragungsmittel mit einem Luft oder Gas empfangenden und/oder zurückführenden Organ verbunden ist, um das Abdeckelement im Schritt mit der Expansion und Kontraktion der Luft oder des Gases schrittweise schlauchartig über das Abdeckglas oder Lichtfenster zu ziehen.

10. Leuchte gemäß Anspruch 9, dadurch **gekennzeichnet**, daß das Abdeckelement eine schlauchartige transparente Materialbahn ist und daß zwischen Abwickelspule und Leuchte, vorzugsweise auf der Rückseite der Leuchte eine Schneide fürs Aufschneiden der schlauchartigen Materialbahn vorgesehen ist.

11. Leuchte gemäß Anspruch 8, 9 oder 10, dadurch **gekennzeichnet**, daß die Kraftübertragungsmittel eine an einem Ende mit dem freien, beweglichen Ende des Balgs oder desgleichen verbundene Zahnstange aufweisen, und die Zahnstange mit dem auf der Antriebswelle der frei umlaufenden Aufwickelspule angeordneten Zahnrad im Eingriff steht, welche Spule mit einer Sperre versehen ist, die das Drehen der Aufwickelspule nur während der Expansion oder Kontraktion der Luft oder des Gases erlaubt.

12. Leuchte gemäß einem der Ansprüche 1 bis 3, dadurch **gekennzeichnet**, daß das Luft oder Gas empfangende Organ ein expandierfähiger Teil der Außenhülle der Leuchte, z.B. ein flexibles "Glas" der Leuchte ist.

## Revendications

1. Assemblage de lampe autonettoyant, dans lequel la source de lumière est capsulée de façon imperméable au gaz, dans lequel assemblage de lampe les changements de la pression de gaz interne régnants à l'intérieur de l'assemblage de lampe sont éliminés ou minimisés à laide d'un moyen pressuriseur (2), permettant la détente et la contraction de l'air ou du gaz sans l'entrée de l'air ambiant et soit communiquant de façon fluide avec l'in- térieur de l'assemblage de lampe (1) soit formant une partie de la surface extérieure de l'assemblage de lampe, **caractérisé** en ce que l'assemblage de lampe comporte un dispositif de nettoyage alimenté ou actionné par le gaz ou l'air chauffant et/ou refroidissant l'assemblage de lampe.

2. Assemblage de lampe selon la revendication 1, **caractérisé** en ce que l'assemblage de lampe comprend des moyens pour stocker les changements de forme provoqué par les variations de température qui causent la détente et/ou la contraction du gaz ou d'air interne ou pour emmagasiner les changements de forme induits par la variation de température de quelques pièces mécaniques de l'assemblage de lampe et transformer soit l'un ou les deux des changements de forme en énergie mécanique afin d'alimenter ou d'actionner le dispositif de nettoyage de l'assemblge de lampe, et en ce que le chauffage et/ou le refroidissement de l'air ou de gaz interne alimente ou actionne le dispositif de nettoyage en synchronisme avec la détente et/ou la contraction de l'air ou de gaz.

3. Assemblage de lampe selon la revendication 1 ou 2, **caractérisé** en ce que le moyen pressuriseur est un moyen recevant et/ou renvoyant de l'air ou du gaz tel qu'un soufflet ou un moyen creux semblable qui est rallongé lorsqu'il reçoit de l'air ou du gaz et raccourci lorsqu'il renvoie de l'air ou de gaz, le raccourcissement étant effectué de préférence par une force de ressort, et le moyen étant fixé de façon immobile par l'une de ses extrémités à l'assemblge de lampe.

4. Assemblage de lampe selon quelconque des revendications 1 à 3, **caractérisé** en ce que l'assemblage de lampe comprend un moyen recevant et/ou renvoyant de l'air ou de gaz, de préférence un soufflet ou un moyen creux semblable provoquant l'activation ou le mouvement d'actionnement à va-et-vient.

5. Assemblage de lampe selon la revendication 1 ou 2, **caractérisé** en ce que l'assemblage de lampe comprend un moyen bimétallique ou un autre moyen de ce genre susceptible d'un changement de forme, de préférence de longueur, lorsqu'il reçoit de l'énergie thermique, le moyen provoquant l'activation ou le mouvement d'actionnement à va-et-vient et étant fixé de façon immobile à l'assemblage de lampe par l'une de ses extrémités.

6. Assemblage de lampe selon la revendication 4 ou 5, **caractérisé** en ce que le dispositif de nettoyage comprend un balai ou un moyen semblable pour balayer l'assemblage de lampe, de préférence le verre de recouvrement de l'assemblage de lampe, le moyen de balayage étant relié au moyen de fourniture d'énergie par le moyen de transport d'énergie pour déplacer le moyen de balayage en synchronisme avec la détente et la contraction de l'air ou du gaz.

7. Assemblage de lampe selon la revendication 6, **caractérisé** en ce que le moyen de transport d'énergie est un moyen à barre, relié d'une extrémité à l'extrémité libre en mouvement du soufflet ou d'un moyen creux semblable et de l'autre extrémité au moyen de balayage.

8. Assemblage de lampe selon la revendication 4 ou 5, **caractérisé** en ce que le moyen de nettoyeage comprend un tissu de matériau transparent, de préférence du type à membrane recouvrant le verre de recouvrement ou la fenêtre lumineuse de l'assemblage de lampe, le tissu étant fourni depuis une bobine d'alimentation ou semblable et, ayant passé à travers l'assemblage de lampe, est rebobiné autour de la bobine collectrice, la bobine étant connectée au moyen recevant et/ou renvoyant de l'air ou de gaz par un moyen de transport d'énergie pour enfiler le tissu de façon séquentielle sur le verre de recouvrement ou la fenêtre lumineuse en synchronisme avec la détente ou la contraction de l'air ou de gaz.

9. Assemblage de lampe selon la revendication 4 ou 5, **caractérisé** en ce que le moyen de nettoyage comprend un tissu de matériau transparent, de préférence recouvrant le verre de recouvrement ou la fenêtre lumineuse de l'assemblage de lampe d'une manière tubulaire, le tissu étant introduit depuis une bobine d'alimentation ou semblable et, ayant traversé l'assemblage de lampe, est rebobiné autour de la bobine collectrice, la bobine étant reliée au moyen recevant et/ou renvoyant de l'air ou de gaz par des moyens de transport d'énergie pour enfiler l'élément de recouvrement d'une manière tubulaire et séquentiel le sur le verre de recouvrement ou la fenêtre lumineuse en synchronisme avec la détente ou la contractin de l'air ou de gaz.

10. Assemblage de lampe selon la revendication 9, **caractérisé** en ce que l'élément de recouvrement un tissu de matériau tubulaire transparent et en ce que entre la bobine d'alimentation et l'assemblage de lampe il y a, de préférence au côté arrière de l'assemblage de lampe, une lame de coupage pour couper ouvert le tissu de matériau tubulaire.

11. Assemblage de lampe selon quelconque des revendications 8, 9 ou 10, **caractérise** en ce que le moyen de transport d'énergie comprend un moyen de crémaillère dentelé relié par l'une de ses extrémités à l'extrémité libre en mouvement du soufflet ou semblable, et la crémaillère étant en prise avec la roue d'engrenage située sur l'arbre de commande de la bobine collectrice tourant librement laquelle est munie d'un rochet permettant la roue collectrice de tourner seulement lors de la détente ou la contraction de l'air ou de gaz.

12. Assemblage de lampe selon quelconque des revendications de 1 à 3, **caractérisé** en ce que le moyen recevant de l'air ou de gaz est une partie dilatable de l'enveloppe extérieure de l'assemblage de lampe, c'est-à-dire un "verre" fléxible de l'assemblage de lampe.
